# EUROPEAN PATENT SPECIFICATION

(11) **EP 2 944 921 B1**
(45) Date of publication and mention of the grant of the patent: **10.05.2017**
(21) Application number: 14001710.4
(22) Date of filing: 15.05.2014
(51) Int. Cl.: G01C 21/00, G05D 1/00, G08G 5/00

(54) **Method of calculating an analytical flight path**
Verfahren zur Berechnung einer analytischen Flugbahn
Procédé de calcul d'un chemin de vol analytique

(43) Date of publication of application: 18.11.2015
(73) Proprietor: Airbus Defence and Space GmbH, 85521 Ottobrunn (DE)
(72) Inventor: Konle, Wolfgang, 88048 Friedrichshafen (DE)
(74) Representative: Meel, Thomas

(56) References cited:
- US-A- 4 829 304
- Dr Wolfgang Konle: "Track Data Smoothing for Air Traffic Simulation", 41. Jahrestagung der Gesellschaft für Informatik, 4 October 2011 (2011-10-04), XP055148834, Retrieved from the Internet: URL:http://www.user.tu-berlin.de/komm/CD/p aper/100159.pdf [retrieved on 2014-10-24]

## Description

The invention relates to methods of calculating smoothed analytical flight trajectories for aircraft using measurements of the positions of aircraft obtained from sensor data, for example radar data.

Modern flight surveillance and control systems use air pictures with comprehensive information about a current situation, i.e. data regarding the speeds, positions, altitudes and headings of aircraft. The information within an air picture is continuously and frequently updated using sensor data or other information sources. All decisions and actions of a flight surveillance and control system are based on its most recent data. Due to various noise sources, the data in an air picture at any given time has a significant noise level. In order to reduce the noise-level, some surveillance and control systems gather information over a longer time period, and process the data contained in a series of air pictures in order to generate a smoothed flight trajectory. Generation of a smoothed flight trajectory is typically carried out using Kalman smoothing and results in a greatly reduced noise level. US 4 829 304 A describes such a method using Kalman smoothing. However, the noise-level of such a smoothed flight trajectory is usually still too high for the trajectory to provide an adequate basis for certain safety-relevant calculations and other tasks which require a high level of reliability.

In Dr. Wolfgang Konle: "Track Data Smoothing for Air Traffic Simulation", 41. Jahrestagung der Gesellschaft fur Informatik, 4 October 2011 (2011-10-04), XP055148834 (http://www.user.tu-berlin.de/komm/CD/paper/100159.pdf) a robust and accurate method to derive smoothed trajectories from air surveillance sensor data is described, wherein the results of an extended smoothing, comprising multiple evaluation paths including Kalman smoothing, were described.

The present invention provides method of calculating an analytical representation of a flight path corresponding to a series of sensor data having position and time measurements, the method comprising the step of applying Kalman-smoothing to the series of data to generate a vector of track states, characterised in that the method further comprises a path approximation step of fitting a polygon chain to the vector of track states and to the set of measurements and using the polygon chain to calculate the analytical representation of the flight path.

The polygon is an envelope to an analytical function which finally represents the flight path. The prior art smoothing approach from the mathematical discipline known as "Approximation Theory" directly approximates an optimal path to the measurements with analytical function classes. The analytical function classes may comprise Splines or Legendre or Hermitic polynomials for example. However, this direct approximation tends to non-physical solutions. Constructing the analytical flight path from an envelope polygon, in accordance with the present invention, intrinsically ensures a physically plausible flight path. With this approach, the invention allows generation of a physically plausible and smooth analytical flight path having a noise level which is significantly lower than that achievable using Kalman filtering alone.

The step of fitting the envelope polygon to the vector of track states preferably comprises fitting a portion of the polygon to a set of track vectors starting with a first track vector and successively taking into account additional track vectors which deviate by more than a pre-determined value in heading or speed from the first track vector. The polygon thus derived is a good approximation to all sections of the path represented by the track vectors with high resolution in manoeuver sections and low resolution in non-manoeuver sections. This provides enhanced noise reduction potential for larger polygon portions.

In order to provide a more accurate solution, preferably the step of fitting the envelope polygon to the measurements comprises deriving weighted geometric and temporal shift vectors from differences between measurement- and polygon positions, taking into account the accuracy ellipsis of the measurements. Multiplication of the shift direction vector with the accuracy ellipsis gives the weight of the shift vector. Temporal shift vectors are parallel to polygon portions and geometric shift vectors are perpendicular. All shift vectors of adjacent polygon portion contribute to a weighted mean shift vector, which is then applied to the polygon point between the adjacent portions. Applying a temporal shift vector to a point of the polygon, results in a time shift. The geometric shift moves the polygon point in space.

The step of fitting the envelope polygon to the measurements may be executed separately for horizontal and vertical directions in order to reduce complexity and enhance the stability of each separate step.

The step of fitting the envelope polygon to the measurements is preferably combined with the construction of a continuous polygon with adjacent matching portions at odd numbered polygon points. The polygon property "continuous" provides the advantage that a differentiable analytical path may be generated from the now continuous envelope polygon.

The step of temporally fitting the polygon to the measurements is completed with a method wherein large speed variations are avoided by using the mean speed for adjacent sectors instead of the individual speed values.

The accuracy of the method may be improved by iteratively repeating the path approximation step.

The analytical flight path is continuous and differentiable and preferably comprises a differentiable lapse of the acceleration achieved by using limited acceleration change rates in the numerical flight path calculation.

Embodiments of the invention are described below by way of example only and with reference to the accompanying drawings in which:
- Figure 1: is a flow diagram of an example method of the invention;
- Figure 2: illustrates fitting the envelope polygon (dashed line) to the vector of track states (bubbles representing track positions with small vectors representing heading and speed );
- Figure 3: illustrates how a portion of a polygon may be shifted to produce a line of best fit for a group of flight data measurements;
- Figure 4: illustrates derivation of weighted shift vectors from the accuracy ellipsis of a measurement;
- Figure 5: illustrates use of weighted shift vectors in connection with polygon lines;
- Figure 6: shows an analytical flight path generated from a polygon fitted to measurement points;
- Figure 7: illustrates waypoint timing on a portion of a polygon; and
- Figure 8: is a distance-time diagram of measurement projections.

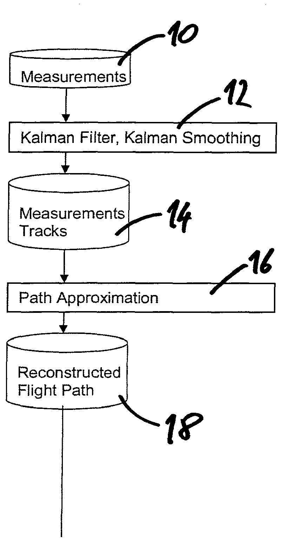

Figure 1 shows a flow diagram for a method of the invention, commencing with a step 10 of gathering flight data measurements for a particular flight. The flight data measurements represent the position, speed and heading of an aircraft at a series of times during a flight or a portion of a flight. The flight data measurements are generated from sensor data, such as radar data. Other flight data measurements may be gathered using other techniques, such as use of bi-static radar or multilateration for example. In a first processing step 12, the flight data measurements are smoothed by a Kalman smoothing process using a Kalman filter to provide a set of smoothed measurement tracks 14, as is known in the art. The smoothed measurement tracks are then processed by an extended smoothing process, or path approximation process 16, the output of which is a trajectory data set defined by means of polygon points each of which is defined by a time and a three-dimensional position. The output trajectory data set corresponds to an analytic description of the flight path represented by the polygon points, in combination with acceleration rules and corresponds to a smoothed reconstructed flight path 18. The output trajectory data set enables systems for air-traffic management and planning to handle air situations with arbitrarily fine resolution in time and space. The method can also be applied to simulated air situations for training purposes.

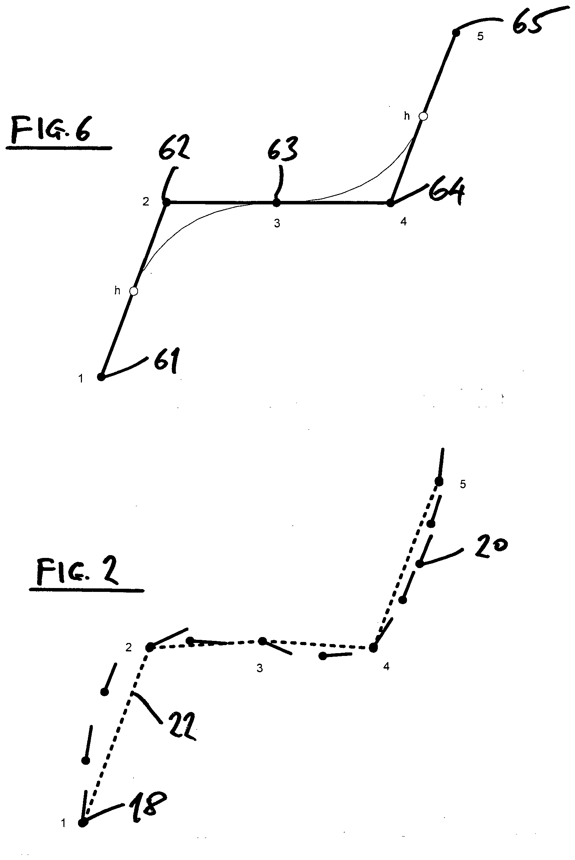

Figure 2 illustrates the first step of the path approximation process 16, starting with a series of track state vectors such as 18, 20 output from the Kalman smoothing process 12. A non-continuous polygon 22 is iteratively adapted to the track state vectors. The polygon starts with the first point at position 1 at the position of the first track state vector 18 and new points 2, 3, 4, 5 are added as soon as there is a significant deviation in heading or speed. Further points are also added based on a maximum time separation corresponding to consecutive vectors and a maximum accumulated perpendicular distance from the polygon to the track vectors.

The polygon 22 is then adapted to the measurements in space and time. The advantage of such adaptation over Kalman smoothing alone is that dimensions are separated. In other words, whereas Kalman smoothing takes into account three-dimensional space and time of every individual measurement, the polygon adaptation step of the present method separately considers the perpendicular and longitudinal distances from the polygon to the measurements and allows using mean values for all measurements contributing to the same polygon portion.

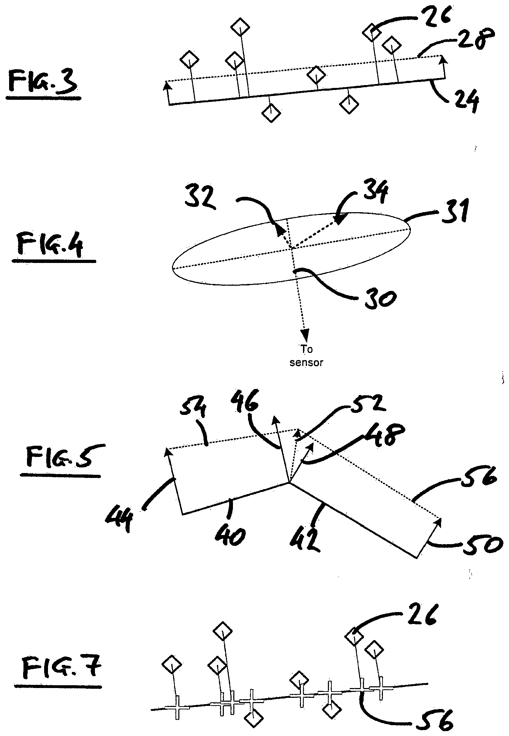

Referring to Figure 3, dashed line 28 represents the line of best fit through a given group of measurement points such as 26 which represent measured positions. For a precise solution, measurement accuracy of the measurement points must be taken into account. The measurement accuracy of a measurement point is an ellipsis dependent on the position, range and accuracy of the sensor which obtained the data for that measurement point. The line of best fit for the adaptation in space is derived by weighting the perpendicular distance of each measurement point with the resulting accuracy in the distance direction. The longitudinal distance adaptation, relevant for time and speed, is considered separately.

Figure 4 shows how direction-dependent accuracy of a measurement is derived from its accuracy ellipsis 31. Due to a high range accuracy, the short axis 30 of the ellipsis 31 points towards the sensor obtaining the measurement. The measured position is given in polar coordinates, azimuth and range, with respect to the sensor position, with corresponding accuracies. Approximately, the flight path is defined in Cartesian coordinates. (Finally it is defined in WGS (World Geographic System) coordinates). The Cartesian accuracy ellipses of the measurements are derived by the coordinate conversion from polar to Cartesian coordinates. The weight of a shift vector is given as the accuracy ellipsis applied to the perpendicular or longitudinal direction of the associated polygon portion. Mathematically, the weight results from multiplying the covariance matrix representing the accuracy ellipsis with the unit vector of the perpendicular or longitudinal direction. Longitudinal and perpendicular weighted shift vectors 32, 34 are derived and applied to lines of the polygon. The weight is given as the inverse length of the vectors 32,34.

Figure 5 shows two consecutive polygon lines 40, 42 and associated pairs of weighted shift vectors 44, 46 and 48, 50 respectively applied to ends of the polygon lines 40, 42. Shifts applied to the polygon lines 40, 42 by the pairs of vectors 44, 46 and 48, 50 would create a gap in the polygon path; such a gap is avoided by using a weighted mean vector 52 of the two shift vectors 46, 48 so that the shifted polygon lines 54, 56 are continuous and close to the line of best fit through the measurements. This procedure is applied to generate both horizontal and vertical shifts. The result is an ordinary polygon and not a continuous polygon; however a continuous polygon with matching portion directions at every odd numbered polygon point may be easily generated from a non-continuous polygon. A continuous polygon is needed for generating a physically relevant smooth flight path from the polygon.

Referring to Figure 6, a polygon is defined by points 61, 62, 64, 65. A point 63 is added in the middle between points 62 and 64. Always if, at an odd point position, two adjacent polygon lines are not sufficiently parallel, a new polygon point is added at the midpoint of the first line.

The above procedure results in a continuous polygon close to lines of best fit through all measurements, however the timing associated with the polygon is the same as that output from the Kalman smoothing (step 12 in Figure 1).

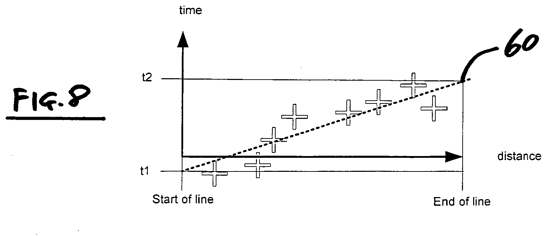

Figure 7 shows a group of measurements, such as 26, each having an associated cross, such as 56, which represents a longitudinal distance from the first point of the polygon line, and a time. In analogy to the perpendicular distance, the weight is derived from the measurement accuracy in the longitudinal direction. Figure 8 shows the weighted distances and the resulting time values in a time-distance diagram. The line of best fit 60 has intersections t1 and t2 representing the start and end of the line 60, respectively. Weighted means values are calculated from t1 and t2 from the previous polygon line. The times of odd numbered polygon positions are used for the generation of the analytical flight path.

Iterative repetition of the steps described above (after initial Kalman filtering) can lead to greater accuracy, depending on the flight path shape, sensor resolution and sensor coverage. However, particularly in cases of low sensor coverage, the time stamps resulting from a small number of inaccurate measurements may themselves be inaccurate and include high speed variations. Using the mitigation method described below, high speed variations can be avoided. By taking into account the analytically calculated path length L of every three-point section, waypoint times can be iteratively adapted to a constant mean speed. If there is a considerable mean speed difference v₁-v₂ between two consecutive sections 1 and 2 of the flight path, the waypoint time common to both sections is adjusted, such that the adjusted time corresponds to a common mean speed v for both sections. Thus if the speeds for the first and second sections are respectively v₁=L₁/(t₂-t₁) and v₂=L₂/(t₃-t₃), a new speed v=(L₁+L₂)/t₃-t₁) is calculated together with a new time t₂=t₁+L₁/v. In each iteration loop over the whole polygon, only some of the largest speed differences are removed. Without this iterative speed difference minimisation, the evaluation of the analytical function given by the polygon and its waypoint time can lead to instabilities with unrealistic acceleration values.

Figure 6 illustrates the construction of the analytical flight path from the continuous polygon with iteratively adapted polygon point times (c.f. previous section). The construction procedure is defined for every polygon section with two polygon portions. In Figure 6 the first section begins at 61 and ends at 63. The portion 62 to 64 is shorter than 61 to 62 and therefore defines the length of the curved path. In the simplest implementation of the construction algorithm, the analytical path is straight from point 61 to point "h" and circular from point h to point 63. The movement along the path is defined by a constant acceleration, resulting from the path length and the given time at point 63. This implementation is mathematically continuous and differentiable. A straight forward algorithm for the calculation of the flight path is given by the following three rules:
1. The analytical flight path tangentially meets the end points of every section in space and time. Due to the continuity condition of the polygon, this condition ensures that the resulting analytical function is mathematically continuous and differentiable.
2. The shorter of the two portions of a section defines the length of the curved part of the flight path in the section.
3. The speed is defined by the path length, the waypoint time and the following acceleration rules:
   o "constant longitudinal acceleration"
   o "circular curved path"
4. The vertical speed is defined by the height difference and the waypoint time Examples for alternate rules to derive a physically more relevant flight path with limited acceleration change rates are:
5. Continuous set of horizontal acceleration rules
   ∘ "acceleration switch on/off/modify rates near section borders"
   ∘ "constant longitudinal and lateral acceleration within sections"
6. Vertical acceleration rule
   - Constant vertical acceleration until vertical speed change is achieved

An example for the iterative flight path construction with the continuous set of acceleration rules is:
- Start with the set of four horizontal parameters "longitudinal/lateral acceleration value", "length of straight segment", "unlimited acceleration change rate" according to the non-continuous rule set of point 3.
- Integrate the curved path according to the rule set 5, ending with the specified speed but with deviating horizontal direction, horizontal position, and time.
- Iteratively modify the four parameters, until the integration approximates the matching conditions with the required accuracy.
- Start with the set of two vertical parameters "vertical speed", "duration of vertical acceleration" and the horizontal path length.
- Integrate the vertical path shape according to the rule set 6 ending with non-matching vertical speed and height
- Iteratively modify the two parameters, until the integration approximates the matching vertical conditions with the required accuracy.

Because of the minimal influence of the acceleration rule to the path length, the iteration shows a good convergence. The iterative flight path construction from the continuous envelope polygon does not have any inference with the polygon path approximation steps. Horizontal and vertical iteration can be carried out independently.

## Claims

1. A method of calculating an analytical representation of a flight path corresponding to a series of sensor data having position and time measurements, the method comprising the step of applying Kalman-smoothing to the series of data to generate a vector of track states, **characterised in that** the method further comprises a path approximation step of fitting a polygon chain to the vector of track states and fitting the polygon chain to the set of measurements and using the polygon chain to calculate the analytical representation of the flight path.

2. A method according to claim 1 wherein the step of fitting the polygon chain to the vector of track states comprises fitting a portion of the polygon chain to a set of track vectors starting with a first track vector and successively taking into account additional track vectors which deviate by more than a pre-determined value in heading or speed from the first track vector.

3. A method according to claim 1 or claim 2 wherein the step of fitting the polygon chain to the measurements comprises deriving weighted geometric and temporal shift vectors from differences between measurement- and polygon chain positions, taking into account the accuracy ellipsis of the measurements.

4. A method according to claim 3 wherein the step of fitting the polygon chain to the measurements is executed separately for horizontal and vertical directions.

5. A method according to claim 3 and including a step of temporally fitting the polygon chain to the measurements which comprises the step of finding and applying a weighted mean time shift to waypoint times of adjacent portions of the continuous polygon chain.

6. A method according to any of claims 3, 4 or 5 wherein the step of fitting the polygon chain to the measurements is carried out in a way leading to a continuous polygon chain with adjacent matching portions at odd numbered polygon points.

7. A method according to claim 4 or claim 5 wherein large speed variations are avoided with an iterative mitigation method which uses the mean speed for adjacent portions of the continuous polygon chain.

8. A method according to any preceding claim wherein the path approximation step is iteratively repeated.

9. A method according to any preceding claim wherein the analytical representation of the flight path comprises straight and circular segments, and tangentially matches odd-numbered points of the continuous polygon chain in space and time.

10. A method according to claim 9 wherein the analytical representation of a physically relevant flight path with a continuous acceleration lapse comprises straight and curved sections taking into account vertical and horizontal acceleration rules and wherein calculation of the analytical representation of the flight path starts with an approximate solution according to claim 9.

## Patentansprüche

1. Verfahren zum Berechnen einer analytischen Darstellung eines Flugweges, die einer Reihe von Sensordaten entspricht, die Positions- und Zeitmessungen aufweisen, wobei das Verfahren den Schritt des Anwendens des Kalman-Glättens auf die Reihe von Daten umfasst, um einen Vektor von Spurzuständen zu erzeugen, **dadurch gekennzeichnet, dass** das Verfahren ferner einen Wegannäherungsschritt des Anpassens einer Polygonkette an den Vektor von Spurzuständen und des Anpassens der Polygonkette an den Satz von Messungen und des Verwendens der Polygonkette, um die analytische Darstellung des Flugweges zu berechnen, umfasst.

2. Verfahren nach Anspruch 1, wobei der Schritt des Anpassens der Polygonkette an den Vektor von Spurzuständen das Anpassen eines Abschnitts der Polygonkette an einen Satz von Spurvektoren umfasst, das mit einem ersten Spurvektor beginnt und aufeinanderfolgend zusätzliche Spurvektoren berücksichtigt, die um mehr als einen vorbestimmten Wert des Kurses oder der Geschwindigkeit von dem ersten Spurvektor abweichen.

3. Verfahren nach Anspruch 1 oder Anspruch 2, wobei der Schritt des Anpassens der Polygonkette an die Messungen das Ableiten gewichteter geometrischer und zeitlicher Verschiebungsvektoren aus Unterschieden zwischen Messungs- und Polygonkettenpositionen umfasst, wobei die Genauigkeitsellipse der Messungen berücksichtigt wird.

4. Verfahren nach Anspruch 3, wobei der Schritt des Anpassens der Polygonkette an die Messungen separat für horizontale und vertikale Richtungen ausgeführt wird.

5. Verfahren nach Anspruch 3, das den Schritt des zeitlichen Anpassens der Polygonkette an die Messungen umfasst, der seinerseits den Schritt des Findens und Anwendens einer gewichteten mittleren Zeitverschiebung auf Wegpunktzeiten von angrenzenden Abschnitten der durchgängigen Polygonkette umfasst.

6. Verfahren nach einem der Ansprüche 3, 4 oder 5, wobei der Schritt des Anpassens der Polygonkette an die Messungen auf eine Weise ausgeführt wird, die zu einer durchgängigen Polygonkette mit angrenzenden übereinstimmenden Abschnitten an ungeradzahligen Polygonpunkten führt.

7. Verfahren nach Anspruch 4 oder Anspruch 5, wobei große Geschwindigkeitsänderungen mit einem iterativen Minderungsverfahren vermieden werden, das die mittlere Geschwindigkeit für angrenzende Abschnitte der durchgängigen Polygonkette verwendet.

8. Verfahren nach einem der vorhergehenden Ansprüche, wobei der Wegannäherungsschritt iterativ wiederholt wird.

9. Verfahren nach einem der vorhergehenden Ansprüche, wobei die analytische Darstellung des Flugwegs geradlinige und kreisförmige Segmente umfasst und mit ungeradzahligen Punkten der durchgängigen Polygonkette in Raum und Zeit tangential übereinstimmt.

10. Verfahren nach Anspruch 9, wobei die analytische Darstellung eines physikalisch zutreffenden Flugwegs mit einem durchgängigen Beschleunigungsverlauf geradlinige und gekrümmte Teile umfasst, die vertikale und horizontale Beschleunigungsregeln berücksichtigen, und wobei die Berechnung der analytischen Darstellung des Flugwegs mit einer angenäherten Lösung nach Anspruch 9 beginnt.

## Revendications

1. Procédé de calcul d'une représentation analytique d'une trajectoire de vol correspondant à une série de données de capteur ayant des mesures de position et de temps, ce procédé comprenant l'étape consistant à appliquer un lissage de Kalman à cette série de données de façon à générer un vecteur d'états de route, **caractérisé en ce que** ce procédé comprend en outre une étape d'approximation de trajectoire consistant à ajuster une chaîne polygonale au vecteur d'états de route et à ajuster cette chaîne polygonale à l'ensemble de mesures et à utiliser cette chaîne polygonale pour calculer la représentation analytique de la trajectoire de vol.

2. Procédé selon la revendication 1 dans lequel l'étape consistant à ajuster la chaîne polygonale au vecteur d'états de route comprend l'ajustement d'une partie de la chaîne polygonale à un ensemble de vecteurs de route en commençant par un premier vecteur de route et en tenant compte successivement de vecteurs de route supplémentaires qui s'écartent de plus qu'une valeur prédéterminée du cap ou de la vitesse provenant du premier vecteur de route.

3. Procédé selon la revendication 1 ou 2, dans lequel l'étape consistant à ajuster la chaîne polygonale aux mesures comprend l'obtention de vecteurs de décalage géométrique et temporel pondérés à partir des différences entre les positions des mesures et de la chaîne polygonale, en tenant compte l'ellipse de précision des mesures.

4. Procédé selon la revendication 3, dans lequel l'étape consistant à ajuster la chaîne polygonale aux mesures est exécutée séparément pour les directions horizontale et verticale.

5. Procédé selon la revendication 3 et comprenant une étape consistant à ajuster temporairement la chaîne polygonale aux mesures qui comprend l'étape consistant à trouver et à appliquer un décalage temporel moyen pondéré aux temps de point de cheminement de parties adjacentes de la chaîne polygonale continue.

6. Procédé selon l'une quelconque des revendications 3, 4 ou 5, dans lequel l'étape consistant à ajuster la chaîne polygonale aux mesures est exécutée d'une façon menant à une chaîne polygonale continue avec des parties adjacentes appariées à des points de polygone de nombre impair.

7. Procédé selon la revendication 4 ou la revendication 5, dans lequel de grandes variations de vitesse sont évitées avec un procédé de réduction itérative qui utilise la vitesse moyenne pour des parties adjacentes de la chaîne polygonale continue.

8. Procédé selon l'une quelconque des revendications précédentes, dans lequel l'étape d'approximation de la trajectoire est répétée de manière itérative.

9. Procédé selon l'une quelconque des revendications, dans lequel la représentation analytique de la trajectoire de vol comprend des segments droits et circulaires, et correspond tangentiellement à des points de nombre impair de la chaîne polygonale continue dans l'espace et dans le temps.

10. Procédé selon la revendication 9, dans lequel la représentation analytique d'une trajectoire de vol physiquement pertinente avec une erreur d'accélération continue comprend des sections droites et courbes en tenant compte des règles d'accélération verticale et horizontale et dans lequel le calcul de la représentation analytique de la trajectoire de vol commence avec une solution approximative selon la revendication 9.
